# EUROPÄISCHE PATENTSCHRIFT

(11) **EP 3 381 402 B1**
(45) Veröffentlichungstag und Bekanntmachung des Hinweises auf die Patenterteilung: **17.07.2019**
(21) Anmeldenummer: 17164040.2
(22) Anmeldetag: 31.03.2017
(51) Int. Cl.: A61C 17/20

(54) **MEDIZINISCHE ULTRASCHALL-BEHANDLUNGSVORRICHTUNG**
MEDICAL ULTRASONIC TREATMENT DEVICE
DISPOSITIF DE TRAITEMENT MÉDICAL À ULTRASONS

(43) Veröffentlichungstag der Anmeldung: 03.10.2018
(73) Patentinhaber: W & H Dentalwerk Bürmoos GmbH, 5111 Bürmoos (AT)
(72) Erfinder: AUER, Theresa, 5110 Oberndorf (AT); BRANDSTÄTTER, Andreas, 5120 St. Pantaleon (AT); SCHRÖCK, Rainer, 5111 Bürmoos (AT); BRUGGER, Wilhelm, 5071 Wals-Siezenheim (AT)
(74) Vertreter: Benda, Ralf

(56) Entgegenhaltungen:
- EP-A1- 2 057 960
- WO-A1-2013/122390
- JP-B2- 5 335 310

## Beschreibung

Die vorliegende Erfindung betrifft eine medizinische, insbesondere dentale oder dental-chirurgische, Ultraschall-Behandlungsvorrichtung zur Erzeugung von Ultraschallschwingungen und zur Übertragung der Ultraschallschwingungen auf ein mit der Ultraschall-Behandlungsvorrichtung verbundenes oder verbindbares Werkzeug. Vorzugsweise umfasst die Ultraschall-Behandlungsvorrichtung eine Zahnsteinentfernungsvorrichtung, welche oftmals als Scaler bezeichnet wird.

Eine derartige medizinische, insbesondere dentale oder dental-chirurgische, Ultraschall-Behandlungsvorrichtung ist zum Beispiel aus der Patentanmeldung US 2010/0109644 A1 bekannt. Zum Erzeugen der Ultraschallschwingungen weist diese Behandlungsvorrichtung einen Ultraschallschwingungs-Generator mit mehreren piezoelektrischen Elementen, insbesondere Piezokeramiken, auf, an die zur Erzeugung der Ultraschallschwingungen eine elektrische Spannung anlegbar ist. Durch das Anlegen der Spannung, insbesondere einer Wechselspannung, verformen sich die piezoelektrischen Elemente (die darin enthaltenen Piezokristalle) und führen eine synchrone, gleich gerichtete Dickenoszillation mit Ultraschallfrequenz aus. Die piezoelektrischen Elemente bilden somit zumindest einen Teil eines elektromechanischen Wandlers, welcher die angelegte Spannung in mechanische Schwingungen wandelt.

Zum Anlegen der elektrischen Spannung an die piezoelektrischen Elemente sind metallische Drähte vorgesehen, welche die piezoelektrischen Elemente mit einer elektrischen Energiequelle verbinden. Zwischen den einzelnen piezoelektrischen Elementen sind ring- oder scheibenförmige, metallische Elektroden angeordnet, die durch Löten mit den metallischen Drähten verbunden sind, um die piezoelektrischen Elemente mit der elektrischen Spannung versorgen zu können.

Die Herstellung eines derartigen Ultraschallschwingungs-Generators, insbesondere das Verlöten der metallischen Drähte mit den Elektroden ist, nicht zuletzt aufgrund der Kleinheit der Bauteile, mühsam, zeitaufwendig und es besteht beständig die Gefahr einer fehlerhaften Montage.

Auch die Anmeldeschriften JP 2010-034817 A und WO 2013/122390 A1 offenbaren Ultraschallinstrumente zwischen deren piezoelektrischen Elementen metallische Elektroden angeordnet sind, die über Drähte und gemäß der JP2010-034817 A über zusätzliche elektrisch leitende Schichten mit elektrischer Spannung versorgbar sind.

Aus EP 2 057 960 A1 ist ebenfalls eine dentale Ultraschallvorrichtung bekannt.

Der vorliegenden Erfindung liegt daher die Aufgabe zugrunde eine medizinische, insbesondere dentale oder dental-chirurgische, Ultraschall-Behandlungsvorrichtung zu schaffen, deren Herstellung oder Montage einfacher, schneller und zuverlässiger zu bewerkstelligen ist.

Diese Aufgabe wird gemäß der vorliegenden Erfindung durch eine medizinische, insbesondere dentale oder dental-chirurgische Ultraschall-Behandlungsvorrichtung mit den Merkmalen des Anspruchs 1 und durch ein Verfahren zur Herstellung einer derartigen Ultraschall-Behandlungsvorrichtung mit den Merkmalen des Anspruchs 14 gelöst. Besonders vorteilhafte Ausführungsformen sind in den Unteransprüchen angeführt.

Die medizinische, insbesondere dentale oder dental-chirurgische, Ultraschall-Behandlungsvorrichtung zur Erzeugung von Ultraschallschwingungen und zur Übertragung der Ultraschallschwingungen auf ein mit der Ultraschall-Behandlungsvorrichtung verbundenes oder verbindbares Werkzeug, umfasst einen Ultraschallschwingungs-Generator mit mehreren piezoelektrischen Elementen, an die zur Erzeugung der Ultraschallschwingungen eine elektrische Spannung anlegbar ist, wobei zur Versorgung der mehreren piezoelektrischen Elemente mit der elektrischen Spannung eine Leiterplatte vorgesehen ist. Die Leiterplatte ist insbesondere durch eine einzige Leiterplatte gebildet.

Das Vorsehen einer Leiterplatte erleichtert die Herstellung und Montage der medizinischen Ultraschall-Behandlungsvorrichtung, insbesondere des Ultraschallschwingungs-Generators oder elektromechanischen Wandlers, erheblich. Insbesondere entfallen damit bei der Herstellung des Ultraschallschwingungs-Generators das Löten bzw. vergleichbare Tätigkeiten zur elektrischen Verbindung der piezoelektrischen Elemente mit der elektrischen Energiequelle. Die Herstellung oder Montage des Ultraschallschwingungs-Generators wird dadurch deutlich einfacher, schneller und kann mit merklich geringerem Ausschuss durchgeführt werden.

Die Leiterplatte besteht insbesondere aus einer flächigen Trägerschicht aus elektrisch isolierendem Material und daran haftenden, elektrisch leitenden, metallischen Leiterbahnen. Als elektrisch isolierendes Material der Trägerschicht ist vorzugsweise Kunststoff, insbesondere faserverstärkter Kunststoff, vorgesehen. Die Leiterbahnen umfassen vorzugsweise Kupfer.

Die Leiterplatte ist besondere bevorzugt als flexible Leiterplatte ausgebildet, die zumindest flexible Abschnitte aufweist oder vollständig, insbesondere einschließlich von einem Körper der Leiterplatte abstehender Fortsätze oder Fahnen, flexibel ist. Eine flexible Leiterplatte kann somit gemäß einem Ausführungsbeispiel flexible Leiterplattenabschnitte und starre Leiterplattenabschnitte aufweisen. Als starre Leiterplattenabschnitte sind zum Beispiel die im Folgenden noch im Detail beschriebenen Kontaktabschnitt für das Anlegen der elektrischen Spannung an zumindest einem der mehreren piezoelektrischen Elemente ausgebildet. Flexible Leiterplatten sind insbesondere dadurch definiert, dass zumindest ein Abschnitt der Leiterplatte oder die gesamte Leiterplatte zumindest einmal (insbesondere beim Verbauen der flexiblen Leiterplatte in der Ultraschall-Behandlungsvorrichtung) oder vorzugsweise mehrmals verformbar ist und diese Verformung (einschließlich der Funktionsfähigkeit nach der Verformung) zumindest im verbauten Zustand beibehält. Die Verformung umfasst insbesondere ein Biegen oder einen Biegevorgang.

Die elektrische Spannung zur Versorgung der mehreren piezoelektrischen Elemente umfasst vorzugsweise eine Wechselspannung. Die elektrische Energiequelle zur Versorgung der mehreren piezoelektrischen Elemente bzw. der Ultraschall-Behandlungsvorrichtung mit elektrischer Energie ist vorzugsweise über ein Versorgungkabel mit elektrischen Leitungen oder Drähten mit der Ultraschall-Behandlungsvorrichtung verbunden. Die elektrischen Leitungen oder Drähte des Versorgungkabels sind vorzugsweise mit der Leiterplatte, insbesondere mit deren elektrischen Leitungen oder Leiterbahnen, verbunden, wozu besonders bevorzugt eine Kupplungsvorrichtung an einem Kupplungsende der Ultraschall-Behandlungsvorrichtung vorgesehen ist.

Die mehreren piezoelektrischen Elemente sind vorzugsweise aus keramischem Material gefertigt. Die mehreren piezoelektrischen Elemente sind als flachzylindrische Plättchen geformt. Zumindest einige oder alle der mehreren piezoelektrischen Elemente weisen vorzugsweise jeweils einen, insbesondere mittig angeordneten, Durchbruch auf, so dass die piezoelektrischen Elemente besonders bevorzugt ringförmig geformt sind. Die mehreren piezoelektrischen Elemente sind besonders bevorzugt entlang einer Achse angeordnet, so dass sie insbesondere einen Stapel bilden. Die Durchbrüche der mehreren piezoelektrischen Elemente sind insbesondere fluchtend entlang der Achse / Längsachse des Stapels angeordnet. Die Durchbrüche der mehreren piezoelektrischen Elemente sind vorzugsweise rund und/ oder kreisförmig geformt.

Bevorzugt weist der Stapel einen Durchgang auf, welcher die Durchbrüche der fluchtend angeordneten, mehreren piezoelektrischen Elementen umfasst. Der Durchgang erstreckt sich insbesondere entlang der Längsachse des Stapels. Der Durchgang ist insbesondere zur Durchleitung eines Behandlungsfluids vorgesehen. Der Durchgang ist insbesondere zur Aufnahme einer Fluidleitung zur Durchleitung eines Behandlungsfluids vorgesehen. Die Fluidleitung durchsetzt vorzugsweise den Stapel bzw. den Durchgang und/ oder erstreckt sich durch den Stapel bzw. den Durchgang.

Die Leiterplatte ist wahlweise als einseitige Leiterplatte, so dass nur auf einer Seite der Leiterplatte oder der Trägerschicht der Leiterplatte elektrisch leitende Leiterbahnen vorgesehen sind, oder vorzugsweise als doppelseitige, durchkontaktierte Leiterplatte mit Leiterbahnen auf beiden Seiten der Trägerschicht ausgebildet. Vorzugsweise ist auf oder über der zumindest einen Leiterbahn eine elektrische Isolierungsschicht, zum Beispiel ein Lack, vorgesehen.

Vorzugsweise weist die Leiterplatte mehrere Kontaktabschnitte auf, wobei jeder Kontaktabschnitt für das Anlegen der elektrischen Spannung an zumindest einem der mehreren piezoelektrischen Elemente vorgesehen ist. Jeder der Kontaktabschnitte ist derart angeordnet und/ oder ausgebildet, dass er an zumindest eines der mehreren piezoelektrischen Elemente elektrisch kontaktierend anlegbar ist. Vorzugsweise ist zumindest einer der Kontaktabschnitte zwischen zwei benachbarte piezoelektrische Elemente einfügbar und insbesondere elektrisch kontaktierend daran anlegbar.

Die Kontaktabschnitte sind vorzugsweise flächig. Die Kontaktabschnitte sind durch flexible oder starre Leiterplatten oder Leiterplattenabschnitte gebildet. Die Kontaktabschnitte entsprechen vorzugsweise der Form der piezoelektrischen Elemente und/ oder sind insbesondere kreisförmig oder ringförmig geformt. Vorzugsweise ist an jedem Kontaktabschnitt zumindest ein Flächenkontakt vorgesehen, an dem eine elektrisch leitende Metallschicht oder Leiterbahn der Leiterplatte eines der mehreren piezoelektrischen Elemente (direkt oder unmittelbar) kontaktiert. Die Flächenkontakte umfassen somit insbesondere Abschnitte der Leiterplatte oder der Kontaktabschnitte, die keine (im Vorstehenden beschriebene) elektrische Isolierungsschicht aufweisen, so dass die (auf der Trägerschicht aufgebrachte) elektrisch leitende Metallschicht oder Leiterbahn frei liegt. Vorzugsweise sind die Flächenkontakte entsprechend den Kontaktabschnitten geformt. Besonders bevorzugt sind die Flächenkontakte kreisförmig oder ringförmig geformt.

Die Kontaktabschnitte sind zum Beispiel durch aus der Leiterplatte herausgeführte flächige Fahnen gebildet. Bevorzugt sind die Kontaktabschnitte jedoch als integraler (nicht herausgeführter) Teil der flexiblen Leiterplatte ausgebildet, so dass die Leiterplatte insbesondere als ein längliches, bandartiges Element, in dem die Kontaktabschnitte enthalten sind, ausgebildet ist.

Vorzugsweise weist zumindest einer der mehreren Kontaktabschnitte, insbesondere ein Kontaktabschnitt, der zwischen zwei benachbarten piezoelektrischen Elementen eingefügt ist, an zwei einander gegenüberliegenden Seiten oder Flächen jeweils einen Flächenkontakt auf. Vorzugsweise bildet eine erste der beiden gegenüberliegenden Seiten einen ersten elektrischen Pol, zum Beispiel einen Plus- oder Minuspol, und die zweite der beiden gegenüberliegenden Seiten den alternativen elektrischen Pol, zum Beispiel einen Minus- oder Pluspol. Damit kann in vorteilhafter Weise ein Kontaktabschnitt mehrere, insbesondere zwei benachbarte piezoelektrische Elemente, zwischen denen er eingefügt ist, elektrisch versorgen.

Vorzugsweise sind die mehreren Kontaktabschnitte, insbesondere deren jeweilige Flächenkontakte, voneinander beabstandet. Vorzugsweise sind die mehreren Kontaktabschnitte, insbesondere die Flächenkontakte der Kontaktabschnitte, im Wesentlichen parallel zueinander und/ oder parallel nebeneinander angeordnet. Vorzugsweise ist zwischen zwei benachbarten, im Wesentlichen parallel zueinander angeordneten Kontaktabschnitten eines der mehreren piezoelektrischen Elemente angeordnet.

Vorzugsweise sind jeweils zwei der mehreren Kontaktabschnitte durch einen, insbesondere streifenförmigen und/ oder schmalen, Verbindungsabschnitt der Leiterplatte miteinander verbunden. Vorzugsweise ist der Verbindungsabschnitt als flexibler Leiterplattenabschnitt ausgebildet. Vorzugsweise ist die Breite der Verbindungsabschnitte geringer als die Breite der Kontaktabschnitte. Vorzugsweise ist die axiale Länge eines Verbindungsabschnitts, der zwei Kontaktabschnitte miteinander verbindet, geringer als der Durchmesser der durch diesen Verbindungsabschnitt verbundenen Kontaktabschnitte. Vorzugsweise entspricht die (in Bezug auf die Längsachse des Stapels der piezoelektrischen Elemente) axiale Länge eines Verbindungsabschnitts im Wesentlichen der axialen Höhe oder Dicke eines piezoelektrischen Elements, insbesondere jenes piezoelektrischen Elements, das zwischen den zwei Kontaktabschnitten angeordnet ist, die durch den Verbindungsabschnitt verbunden sind. Vorzugsweise ist zumindest ein Verbindungsabschnitt im Wesentlichen parallel zu einer peripheren Außenseite oder einem Außenmantel eines piezoelektrischen Elements angeordnet, insbesondere jenes piezoelektrischen Elements, das zwischen den zwei Kontaktabschnitten angeordnet ist, die durch den Verbindungsabschnitt verbunden sind. Vorzugsweise sind die Verbindungsabschnitte von den piezoelektrischen Elementen beabstandet, insbesondere durch einen Luftspalt.

Falls die Leiterplatte als doppelseitige Leiterplatte mit Leiterbahnen auf beiden Seiten der Trägerschicht ausgebildet ist, dann sind vorzugsweise an zumindest einem Verbindungsabschnitt, insbesondere an mehreren Verbindungsabschnitten, Durchkontaktierungen vorgesehen, an denen jeweils eine Leiterbahn von einer Seite der Leiterplatte auf die andere, gegenüberliegende Seite der Leiterplatte wechselt. Auf diese Weise ist es möglich, dass an einem Kontaktabschnitt, d.h. an gegenüberliegenden Seiten eines Kontaktabschnitts, entgegengesetzte elektrische Pole, die insbesondere durch die Flächenkontakte gebildet sind, zur Spannungsversorgung der piezoelektrischen Elemente vorgesehen sind.

Vorzugsweise sind die piezoelektrischen Elemente und/ oder die Kontaktabschnitte schichtweise angeordnet. Insbesondere sind die piezoelektrischen Elemente und/ oder die Kontaktabschnitte alternierend schichtweise angeordnet, so dass abwechselnd auf ein piezoelektrisches Element ein Kontaktabschnitt und auf einen Kontaktabschnitt ein piezoelektrisches Element folgt.

Die mehreren piezoelektrischen Elemente sind in einem Stapel angeordnet, wobei zwischen zwei benachbarten piezoelektrischen Elementen des Stapels jeweils einer der mehreren Kontaktabschnitte der Leiterplatte angeordnet ist und/ oder zwischen zwei benachbarten Kontaktabschnitten jeweils ein piezoelektrisches Element des Stapels angeordnet ist. Die mehreren piezoelektrischen Elemente und die mehreren Kontaktabschnitte bilden gemeinsam einen Stapel. Besonders bevorzugt ist am Anfang und Ende des Stapels jeweils einer der mehreren Kontaktabschnitte angeordnet. Besonders bevorzugt weisen jene am Anfang und am Ende des Stapels angeordnete Kontaktabschnitte jeweils nur einen Flächenkontakt auf, während die andere Seite des Kontaktabschnitts elektrisch isoliert ist, insbesondere eine elektrische Isolierungsschicht aufweist. Besonders bevorzugt ist die elektrisch isolierte Seite des Kontaktabschnitts von den piezoelektrischen Elementen entfernt, während die Seite mit dem Flächenkontakt einem piezoelektrischen Element zugeordnet ist, insbesondere dieses kontaktiert.

Bevorzugt weist zumindest einer der mehreren Kontaktabschnitte des Stapels, der zwischen zwei benachbarten piezoelektrischen Elementen eingefügt ist, an seinen zwei einander gegenüberliegenden Seiten oder Flächen jeweils einen Flächenkontakt auf. Vorzugsweise bildet eine erste der beiden gegenüberliegenden Seiten oder der dort vorgesehene Flächenkontakte einen ersten elektrischen Pol, zum Beispiel einen Plus- oder Minuspol, und die zweite der beiden gegenüberliegenden Seiten oder der dort vorgesehene Flächenkontakte den alternativen elektrischen Pol, zum Beispiel einen Minus- oder Pluspol.

Vorzugsweise entspricht der Abstand zwischen zwei Kontaktabschnitten in etwa der axialen Höhe oder Dicke eines piezoelektrischen Elements, insbesondere der Höhe des Mantels eines flachzylindrisch geformten piezoelektrischen Elements, und/ oder der axialen Länge eines Verbindungsabschnitts.

Vorzugsweise sind die, insbesondere schmalen und/ oder streifenförmigen, Verbindungsabschnitte der Leiterplatte außerhalb des Stapels angeordnet. Vorzugsweise stehen die Verbindungsabschnitte seitlich oder umfangsseitig von dem Stapel ab. Vorzugsweise sind in Bezug auf eine Längsachse des Stapels aufeinander folgende Verbindungsabschnitte jeweils an entgegengesetzten Seiten des Stapels angeordnet.

Vorzugsweise ist eine als flexible Leiterplatte ausgebildete Leiterplatte vor dem Verbauen in dem Ultraschall-Schwingungsgenerator oder vor der Herstellung des die piezoelektrischen Elemente umfassenden Stapels als flacher Streifen ausgebildet, der insbesondere die mehreren Kontaktabschnitte und die, insbesondere schmalen und/ oder streifenförmigen, Verbindungsabschnitte sowie einen im Nachfolgenden beschriebenen Anschlussabschnitt aufweist.

Vorzugsweise ist die flexible Leiterplatte nach dem Verbauen in dem Ultraschall-Schwingungsgenerator oder nach der Herstellung des die piezoelektrischen Elemente umfassenden Stapels zumindest oder ausschließlich im Bereich der mehreren Kontaktabschnitte und der, insbesondere schmalen und/ oder streifenförmigen, Verbindungsabschnitte gebogen oder gefaltet. Besonders bevorzugt ist die flexible Leiterplatte nach dem Verbauen S-förmig geformt, insbesondere bilden die an und/ oder zwischen den piezoelektrischen Elementen angeordneten Kontaktabschnitte und die außerhalb des Stapels angeordneten Verbindungsabschnitte eine S-Form.

Die in den vorstehenden Absätzen beschriebene Anordnung der piezoelektrischen Elemente und der Kontaktabschnitte in einem Stapel, die Anordnung der Verbindungsabschnitte der Leiterplatte außerhalb des Stapels, die gebogene, gefaltete oder S-förmige Form einer flexiblen Leiterplatte usw. ermöglichen in vorteilhafter Weise eine sehr einfache Montage und Herstellung des Ultraschall-Schwingungsgenerators bei gleichzeitig zuverlässiger Wirkung und hoher Leistung.

Vorzugsweise weisen zumindest einige oder alle der Kontaktabschnitte der Leiterplatte jeweils einen, insbesondere mittig angeordneten, Durchbruch auf, so dass die Kontaktabschnitte besonders bevorzugt ringförmig geformt sind. Die Durchbrüche der Kontaktabschnitte entsprechen vorzugsweise den im Vorstehenden genannten Durchbrüchen der piezoelektrischen Elemente, insbesondere in ihrer Größe, ihrem Durchmesser, ihrer Form und/ oder ihrer Position. Die Durchbrüche der Kontaktabschnitte sind vorzugsweise rund und/ oder kreisförmig geformt. Die Durchbrüche der mehreren Kontaktabschnitte sind insbesondere fluchtend entlang der Achse / Längsachse des Stapels angeordnet. Die Durchbrüche der mehreren Kontaktabschnitte sind insbesondere fluchtend mit den Durchbrüchen der piezoelektrischen Elemente angeordnet.

Der im Vorstehenden bereits beschriebene Durchgang des Stapels umfasst insbesondere die Durchbrüchen der mehreren piezoelektrischen Elemente und der mehreren Kontaktabschnitte der Leiterplatte, welche insbesondere fluchtend, entlang der Längsachse des Stapels und alternierend angeordnet sind. Der Durchgang ist insbesondere zur Durchleitung eines Behandlungsfluids, zum Beispiel durch Aufnahme einer mit einer Fluidquelle verbindbaren Fluidleitung, vorgesehen.

Vorzugsweise umfasst die Leiterplatte einen, insbesondere streifenförmigen oder länglichen, Anschlussabschnitt zum Anschluss an eine elektrische Energiequelle. Der Anschlussabschnitt erstreckt sich insbesondere in Richtung und/ oder bis zu einer Kupplungsvorrichtung der Ultraschall-Behandlungsvorrichtung zur Verbindung mit einer Steuer-, Regel- und/ oder Versorgungseinrichtung. Der Anschlussabschnitt erstreckt sich vorzugsweise von dem Ultraschallschwingungs-Generator, insbesondere zwischen und/ oder zu der Kupplungsvorrichtung. Der Anschlussabschnitt ist vorzugsweise mit einem der Kontaktabschnitte der Leiterplatte, insbesondere unmittelbar, verbunden. Die Breite des Anschlussabschnitts ist vorzugsweise geringer als die Breite oder der Außendurchmesser der Kontaktabschnitte. Der Anschlussabschnitt weist vorzugsweise zwei einander gegenüberliegende Seiten auf, die beide mit jeweils zumindest einer Leiterbahn versehen sind.

Vorzugsweise umfasst der Anschlussabschnitt ein freies oder einer elektrischen Energiequelle zugewandtes oder der Kupplungsvorrichtung zugewandtes Ende, an dem zwei elektrische, mit der Leiterplatte, insbesondere deren Leiterbahnen, elektrisch verbundene Kontakte zur Versorgung der Leiterplatte und/ oder des Ultraschallschwingungs-Generators mit elektrischer Energie vorgesehen sind. Die zwei elektrischen Kontakte sind zum Beispiel als Stiftkontakte ausgebildet. Die zwei elektrischen Kontakte sind vorzugsweise mit der Leiterplatte, insbesondere deren Leiterbahnen, verlötet. Bevorzugt sind über die zwei elektrischen Kontakte die in der Leiterplatte verlaufenden Leiterbahnen von außen kontaktierbar.

Vorzugsweise umfasst der Anschlussabschnitt an seinem Ende, an dem die zwei mit der Leiterplatte elektrisch verbundenen Kontakte vorgesehen sind, einen Kunststoffkörper, der die elektrischen Kontakte und das Ende des Anschlussabschnitts der Leiterplatte umgibt und/ oder miteinander verbindet. Der Kunststoffkörper ist zum Beispiel aus Silikon oder Epoxidharz hergestellt. Der Kunststoffkörper ist vorzugsweise elektrisch isolierend. Der Kunststoffkörper ist vorzugsweise durch Vergießen oder Verspritzen hergestellt.

Der Kunststoffkörper ist vorzugsweise als Formkörper mit einer definierten Form ausgebildet. Besonders bevorzugt ist der Kunststoffkörper als Steckelement geformt, das zur Befestigung der Leiterplatte und der elektrischen Kontakte in eine (erste) Steckaufnahme der medizinischen Ultraschall-Behandlungsvorrichtung steckbar ist. Das Steckelement ist vorzugsweise gebogen, zum Beispiel sattelförmig geformt. Die Ausbildung des Kunststoffkörpers als Steckelement erleichtert zusätzlich die Montage der Ultraschall-Behandlungsvorrichtung.

Die (erste) Steckaufnahme zur Aufnahme des Kunststoffkörpers ist vorzugsweise an oder anschließend zu der Kupplungsvorrichtung oder einem Kupplungsende zur Verbindung mit einer Steuer-, Regel- und/ oder Versorgungseinrichtung der Ultraschall-Behandlungsvorrichtung vorgesehen. Die Steckaufnahme ist vorzugsweise an einem Ende einer Hülse oder eines hülsenartigen Elements der Ultraschall-Behandlungsvorrichtung vorgesehen.

Vorzugsweise sind die mehreren Kontaktabschnitte nach dem Verbauen in dem Ultraschall-Schwingungsgenerator oder nach der Herstellung des die piezoelektrischen Elemente umfassenden Stapels relativ zu dem Anschlussabschnitt und/ oder relativ zu den Verbindungsabschnitten gewinkelt angeordnet.

Vorzugsweise umfasst die Ultraschall-Behandlungsvorrichtung eine weitere (oder zweite oder separate) Leiterplatte zur Versorgung einer an der Ultraschall-Behandlungsvorrichtung vorgesehenen, elektromagnetische Strahlung emittierenden Strahlungsquelle mit elektrischer Energie. Vorzugsweise sind die erste, zur Versorgung der mehreren piezoelektrischen Elemente mit elektrischer Spannung vorgesehene Leiterplatte und die zweite Leiterplatte als eigenständige, separate Leiterplatten ausgebildet. Insbesondere sind die erste und die zweite Leiterplatte beabstandet voneinander in der Ultraschall-Behandlungsvorrichtung angeordnet. Vorzugsweise erstreckt sich die zweite Leiterplatte über den oder im Wesentlichen parallel zu dem Ultraschall-Schwingungsgenerator. Vorzugsweise ist die zweite Leiterplatte als starre oder (teilweise oder vollständig) flexible Leiterplatte ausgebildet.

Vorzugsweise umfasst die zweite Leiterplatte ein freies oder einer elektrischen Energiequelle zugewandtes oder der Kupplungsvorrichtung zugewandtes Ende, an dem zwei elektrische, mit der zweiten Leiterplatte, insbesondere deren Leiterbahnen, elektrisch verbundene Kontakte zur Versorgung der zweiten Leiterplatte und/ oder der Strahlungsquelle mit elektrischer Energie vorgesehen sind. Die zwei elektrischen Kontakte sind zum Beispiel als Stiftkontakte ausgebildet. Die zwei elektrischen Kontakte sind vorzugsweise mit der zweiten Leiterplatte, insbesondere deren Leiterbahnen, verlötet.

Vorzugsweise umfasst die zweite Leiterplatte an einem Ende, an dem die zwei mit der Leiterplatte elektrisch verbundenen Kontakte vorgesehen sind, einen zweiten Kunststoffkörper, der die elektrischen Kontakte und das Ende der zweiten Leiterplatte umgibt und/ oder miteinander verbindet. Der zweite Kunststoffkörper ist zum Beispiel aus Silikon oder Epoxidharz hergestellt. Der zweite Kunststoffkörper ist vorzugsweise elektrisch isolierend. Der zweite Kunststoffkörper ist vorzugsweise durch Vergießen oder Verspritzen hergestellt.

Bevorzugt ist der zweite Kunststoffkörper als Formkörper mit einer definierten Form ausgebildet. Besonders bevorzugt ist der zweite Kunststoffkörper als Steckelement geformt, das zur Befestigung der zweiten Leiterplatte und der elektrischen Kontakte in eine zweite Steckaufnahme der medizinischen Ultraschall-Behandlungsvorrichtung steckbar ist. Das Steckelement ist vorzugsweise gebogen, zum Beispiel sattelförmig geformt. Die Ausbildung des zweiten Kunststoffkörpers als Steckelement erleichtert ebenfalls die Montage der Ultraschall-Behandlungsvorrichtung.

Die erste Steckaufnahme und die zweite Steckaufnahme sind vorzugsweise als getrennte, voneinander beabstandete Steckaufnahmen ausgebildet. Die zweite Steckaufnahme zur Aufnahme des Kunststoffkörpers ist vorzugsweise an oder anschließend zu der Kupplungsvorrichtung oder eines Kupplungsendes zur Verbindung mit einer Steuer-, Regel- und/ oder Versorgungseinrichtung der Ultraschall-Behandlungsvorrichtung vorgesehen. Die zweite Steckaufnahme ist vorzugsweise an einem Ende einer Hülse oder eines hülsenartigen Elements der Ultraschall-Behandlungsvorrichtung vorgesehen. Vorzugsweise sind beide Steckaufnahmen an einem einzigen oder gemeinsamen hülsenartigen Element vorgesehen.

Alternativ ist es denkbar, eine einzige, insbesondere flexible, Leiterplatte zur Versorgung der mehreren piezoelektrischen Elemente mit elektrischer Spannung und der an der Ultraschall-Behandlungsvorrichtung vorgesehenen, elektromagnetische Strahlung emittierenden Strahlungsquelle mit elektrischer Energie vorzugsehen. Vorzugsweise umfasst diese einzige Leiterplatte separate Leiterbahnen für die elektrische Versorgung der mehreren piezoelektrischen Elemente und der Strahlungsquelle.

Vorzugsweise weist die Ultraschall-Behandlungsvorrichtung eine Werkzeugerkennungsvorrichtung zur Erkennung eines mit der Ultraschall-Behandlungsvorrichtung verbindbaren Werkzeugs auf, wobei die Werkzeugerkennungsvorrichtung zur Erkennung des Werkzeugs elektrische Signale überträgt. Bevorzugt ist es denkbar, dass eine einzige, insbesondere flexible, Leiterplatte zur Versorgung der mehreren piezoelektrischen Elemente mit elektrischer Spannung und zur Übertragung der elektrischen Signale der Werkzeugerkennungsvorrichtung vorgesehen ist. Besonders bevorzugt ist es denkbar, dass eine einzige Leiterplatte zur Versorgung der mehreren piezoelektrischen Elemente mit elektrischer Spannung, zur Versorgung einer an der Ultraschall-Behandlungsvorrichtung vorgesehenen, elektromagnetische Strahlung emittierenden Strahlungsquelle mit elektrischer Energie und zur Übertragung der elektrischen Signale der Werkzeugerkennungsvorrichtung vorgesehen ist. Vorzugsweise umfasst diese einzige Leiterplatte jeweils separate Leiterbahnen für die elektrische Versorgung der mehreren piezoelektrischen Elemente und der Strahlungsquelle und für die Übertragung der elektrischen Signale der Werkzeugerkennungsvorrichtung.

Vorzugsweise ist die elektromagnetische Strahlung emittierenden Strahlungsquelle von der einzigen oder zweiten, separaten Leiterplatte lösbar, so dass die Strahlungsquelle tauschbar ist. Dazu ist vorzugsweise eine lösbare elektrische Verbindung zwischen der Strahlungsquelle und der einzigen oder zweiten, separaten Leiterplatte vorgesehen, zum Beispiel eine elektrische Steckverbindung oder Federkontatierung.

Ein Verfahren zur Herstellung einer medizinischen Ultraschall-Behandlungsvorrichtung zur Erzeugung von Ultraschallschwingungen und zur Übertragung der Ultraschallschwingungen auf ein mit der Ultraschall-Behandlungsvorrichtung verbundenes oder verbindbares Werkzeug, insbesondere zur Herstellung einer im Vorstehenden beschriebenen Ultraschall-Behandlungsvorrichtung, umfasst, dass ein Ultraschallschwingungs-Generator mit mehreren piezoelektrischen Elementen, an die zur Erzeugung der Ultraschallschwingungen eine elektrische Spannung anlegbar ist, zur Verfügung gestellt wird und dass die mehreren piezoelektrischen Elemente mit einer (einzigen), insbesondere flexiblen, Leiterplatte verbunden werden, über welche die piezoelektrischen Elemente mit der elektrischen Spannung versorgbar sind.

Vorzugsweise weist die Leiterplatte mehrere, vorzugsweise kreisförmige, Kontaktabschnitte auf, wobei an jedem Kontaktabschnitt zumindest ein Flächenkontakt mit einer elektrisch leitenden Metallschicht vorgesehen ist, wobei bei dem Herstellungsverfahren die Kontaktabschnitte im Wesentlichen parallel zueinander angeordnet werden, insbesondere durch Verformen, Biegen, Falten einer flexiblen Leiterplatte, und zwischen zwei benachbarten Kontaktabschnitten eines der mehreren piezoelektrischen Elemente kontaktierend eingefügt wird, so dass das zwischen den zwei benachbarten Kontaktabschnitten eingefügte piezoelektrische Element jeweils einen Flächenkontakt der beiden benachbarten Kontaktabschnitte (direkt oder unmittelbar) kontaktiert.

Vorzugsweise werden bei dem Herstellungsverfahren die mehreren piezoelektrischen Elemente derart in einem Stapel angeordnet, dass zwischen zwei benachbarten piezoelektrischen Elementen des Stapels jeweils einer der mehreren Kontaktabschnitte der Leiterplatte angeordnet ist.

Vorzugsweise werden bei dem Herstellungsverfahren die mehreren piezoelektrischen Elemente und die mehreren Kontaktabschnitte, welche über, vorzugsweise schmalen und/ oder streifenförmigen, Verbindungsabschnitte miteinander verbunden sind, derart in dem Stapel angeordnet, dass sich die Verbindungsabschnitte außerhalb des Stapels befinden und/ oder von den mehreren piezoelektrischen Elementen beabstandet sind und/ oder in Bezug auf eine Längsachse des Stapels aufeinander folgende Verbindungsabschnitte jeweils an entgegengesetzten Seiten des Stapels angeordnet sind.

Vorzugsweise sind in den mehreren piezoelektrischen Elementen und in den mehreren Kontaktabschnitten Durchbrüche vorgesehen, wobei die mehreren piezoelektrischen Elemente und die mehreren Kontaktabschnitte bei dem Herstellungsverfahren derart angeordnet werden, insbesondere in Form des Stapels, dass aus den Durchbrüchen der mehreren piezoelektrischen Elemente und der mehreren Kontaktabschnitte ein Durchgang gebildet wird. Der Durchgang ist insbesondere zur Leitung eines Behandlungsfluids und/ oder zur Aufnahme eine Fluidleitung vorgesehen. Vorzugsweise die werden piezoelektrischen Elemente und die Kontaktabschnitte bei dem Herstellungsverfahren derart angeordnet, dass der Stapel einen Durchgang hat, der sich entlang einer Längsachse des Stapels erstreckt.

Vorzugsweise sind in den mehreren piezoelektrischen Elementen und in den mehreren Kontaktabschnitten Durchbrüche vorgesehen, wobei bei dem Herstellungsverfahren die mehreren piezoelektrischen Elemente und die mehreren Kontaktabschnitte, insbesondere alternierend, derart um eine Fluid- oder Rohrleitung (zur Leitung eines Behandlungsfluids) der medizinischen Ultraschall-Behandlungsvorrichtung positioniert werden, dass die Fluid- oder Rohrleitung die Durchbrüche durchsetzt. Vorzugsweise ist zumindest ein Teil der Fluid- oder Rohrleitung darin aufgenommen.

Die medizinische, insbesondere dentale oder dental-chirurgische, Ultraschall-Behandlungsvorrichtung umfasst insbesondere ein Handstück oder Handgriffelement, in dem der Ultraschallschwingungs-Generator angeordnet ist. Das Handstück oder Handgriffelement weist vorzugsweise zumindest eines der folgenden Bauteile auf:
- eine Werkzeughaltevorrichtung zum, vorzugsweise lösbaren, Halten eines Werkzeugs. Das Werkzeug umfasst zum Beispiel eine Scalerspitze, ein Sägeblatt oder ein dental-chirurgisches Werkzeug zum abrasiven Entfernen von Knochenmaterial, insbesondere des Kieferknochens. Die Werkzeughaltevorrichtung weist insbesondere zumindest einen formschlüssigen Halte- oder Verbindungsabschnitt auf, zum Beispiel ein Gewinde, insbesondere einen Gewindestift oder ein Innengewinde, eine wendelförmige Nut, eine sich kegelförmig verjüngende Fläche oder zumindest ein Formelement, zum Beispiel ein sphärisches Formelement.
- eine elektromagnetische Strahlung emittierende Strahlungsquelle zur Abgabe elektromagnetischer Strahlung in Richtung der Behandlungsstelle und/ oder eines mit dem Handstück oder Handgriffelement verbundenen Werkzeugs. Die Strahlungsquelle umfasst vorzugsweise zumindest ein optisches Halbleiterelement, insbesondere eine Leuchtdiode. Die Strahlungsquelle ist vorzugsweise Teil einer Beleuchtungsvorrichtung, die zum Beispiel des Weiteren zumindest einen optischen Leiter zum Leiten der elektromagnetischen Strahlung, ein oder mehrere Elemente zur elektrischen Energieversorgung und/ oder eine Steuervorrichtung zur Steuerung der Abgabe der elektromagnetischer Strahlung aufweist. Die Strahlungsquelle ist vorzugsweise dazu ausgebildet, sichtbares Licht und/ oder Strahlung zum Erkennen von Karies, Plaque, Biofilmen oder ähnlichen Abnormitäten abzugeben, zum Beispiel mit einer Wellenlänge im Bereich von etwa 390 nm - 420 nm. Die Steuervorrichtung ist insbesondere dafür vorgesehen, eine alternierende Abgabe von sichtbarem Licht und Strahlung zum Erkennen von Karies, Plaque, Biofilmen zu bewirken. Die Strahlungsquelle ist vorzugsweise ringförmig um die Werkzeughaltevorrichtung angeordnet. Die Strahlungsquelle ist insbesondere durch die zweite Leiterplatte mit elektrischer Energie versorgbar, so wie dies im Vorstehenden bereits beschrieben ist.
- eine oder mehrere Fluidleitungen zum Leiten eines Fluids, insbesondere einer Flüssigkeit und/ oder eines Gases zum Kühlen und/ oder Spülen der Behandlungsstelle. Die Fluidleitung erstreckt sich insbesondere von einem Anschluss- oder Kupplungsende in Richtung des oder bis zu dem Werkzeugende des Handstücks oder Handgriffelements. Vorzugsweise erstreckt sich die zumindest eine Fluidleitung durch den Ultraschallschwingungs-Generator, so wie dies im Vorstehenden bereits beschrieben wurde. Vorzugsweise ist die zumindest eine Fluidleitung mit dem an die Werkzeughaltevorrichtung anschließbaren Werkzeug verbindbar, so dass das in der zumindest einen Fluidleitung geleitete Fluid in einen Kanal des Werkzeugs abgebbar ist.
- eine Kupplungsvorrichtung an einem Kupplungsende der Handstücks oder Handgriffelements zur Verbindung mit einer Steuer-, Regel- und/ oder Versorgungseinrichtung. Die Kupplungsvorrichtung umfasst vorzugsweise eine elektrische Verbindung, zum Beispiel zwei oder mehr elektrische Kontakte, zur Verbindung mit einer elektrischen Energiequelle. Die Kupplungsvorrichtung ist somit insbesondere dafür vorgesehen, den Ultraschallschwingungs-Generator und gegebenenfalls weitere elektrische Verbraucher, zum Beispiel eine elektromagnetische Strahlung emittierende Strahlungsquelle mit elektrischer Energie zu versorgen. Die Kupplungsvorrichtung verbindet somit insbesondere die Leiterplatte(n) mit der elektrischen Energiequelle. Die Kupplungsvorrichtung umfasst vorzugsweise eine Fluid-Verbindung zur Verbindung mit einer Fluidquelle, insbesondere mit einer Flüssigkeitsquelle. Die Fluid-Verbindung ist insbesondere als Teil der im Vorstehenden beschriebenen zumindest einen Fluidleitung ausgebildet oder damit verbunden.

Die Erfindung wird nachfolgend anhand bevorzugter Ausführungsbeispiele und Bezug nehmend auf die beigefügten Zeichnungen erläutert.
Figur 1 zeigt eine medizinische, insbesondere dentale, Ultraschall-Behandlungsvorrichtung zur Erzeugung von Ultraschallschwingungen und zur Übertragung der Ultraschallschwingungen auf ein mit der Ultraschall-Behandlungsvorrichtung verbundenes oder verbindbares Werkzeug.
Figur 2 zeigt eine Leiterplatte einer Ultraschall-Behandlungsvorrichtung mit mehreren piezoelektrischen Elementen und einem Steckelement mit elektrischen Kontakten zur Verbindung mit einer elektrischen Energiequelle.
Figur 3 zeigt eine als flacher Streifen ausgebildete flexible Leiterplatte vor dem Verbauen in einem Ultraschall-Schwingungsgenerator einer Ultraschall-Behandlungsvorrichtung.
Figur 4 zeigt eine Ultraschallschwingungsbaugruppe einer Ultraschall-Behandlungsvorrichtung mit einem eine Leiterplatte umfassenden Ultraschallschwingungs-Generator und einer Schwingachse.
Figur 5 zeigt eine Schnittdarstellung durch einen Abschnitt einer Ultraschall-Behandlungsvorrichtung im Bereich eines Ultraschallschwingungs-Generators mit einer Leiterplatte.
Figur 6 zeigt eine Strahlungsquellen-Baugruppe einer Ultraschall-Behandlungsvorrichtung mit einer elektromagnetische Strahlung emittierenden Strahlungsquelle und einem Steckelement mit elektrischen Kontakten zur Verbindung mit einer elektrischen Energiequelle.
Figur 7 zeigt eine Befestigungshülse einer Ultraschall-Behandlungsvorrichtung zum Befestigen zumindest eines Steckelements mit elektrischen Kontakten zur Verbindung mit einer elektrischen Energiequelle.
Figur 8 zeigt eine Ultraschallschwingungsbaugruppe einer Ultraschall-Behandlungsvorrichtung mit einem Ultraschallschwingungs-Generator einschließlich einer Leiterplatte, die zumindest teilweise von einer Umhüllung umgegeben sind, und einer Schwingachse.
Figur 9 zeigt eine Baueinheit einer Ultraschall-Behandlungsvorrichtung mit einer Ultraschallschwingungsbaugruppe gemäß Figur 4 oder 8 und einer Strahlungsquellen-Baugruppe gemäß Figur 6.

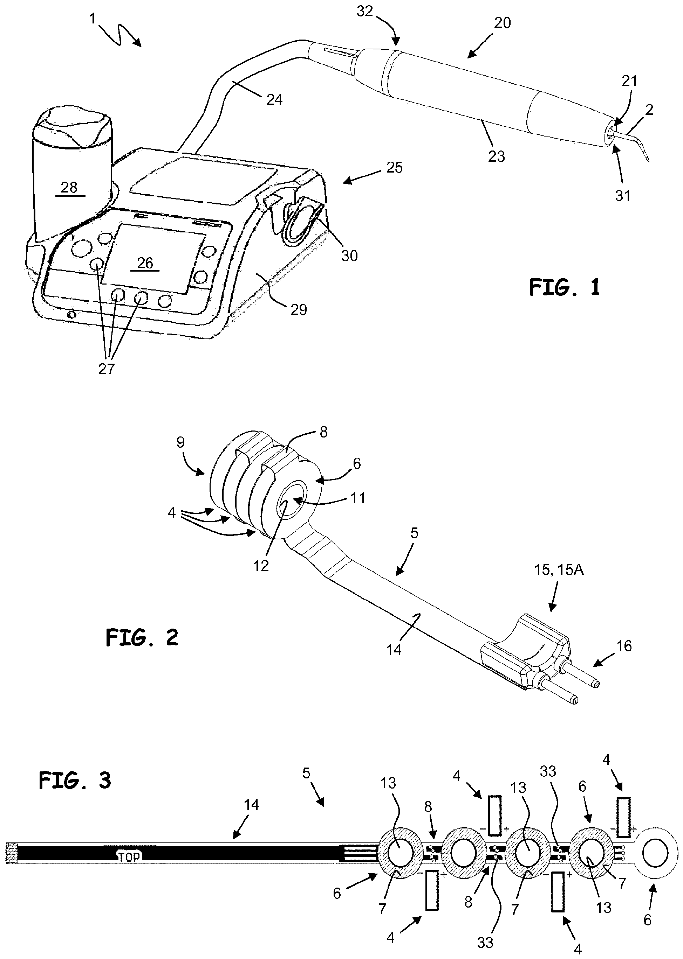

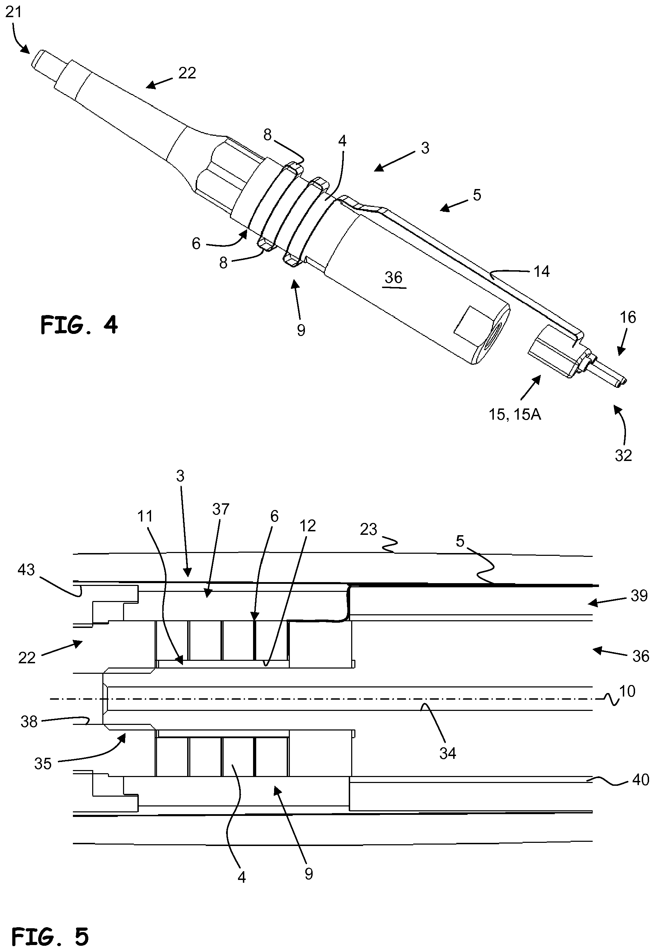

In der Figur 1 ist eine medizinische, insbesondere dentale, Ultraschall-Behandlungsvorrichtung 1 zur Erzeugung von Ultraschallschwingungen und zur Übertragung der Ultraschallschwingungen auf ein Werkzeug 2 dargestellt. Die Ultraschall-Behandlungsvorrichtung 1 umfasst ein schwingungsübertragendes Handgriffelement oder Handstück 20 und ein medizinisches oder zahnärztliches, insbesondere mit Schwingungen betreibbares, Werkzeug 2. Das Handstück 20 weist eine hohle Außen- oder Griffhülse 23 auf, in der ein Ultraschallschwingungs-Generator 3 mit mehreren piezoelektrischen Elementen 4 angeordnet ist, auf den im Folgenden noch im Detail eingegangen wird. Das Werkzeug 2 ist in einer, vorzugsweise formschlüssigen, Werkzeughaltevorrichtung 21 lösbar gehalten. Eine Schwingachse 22 (siehe z.B. Figur 4) verbindet die Werkzeughaltevorrichtung 21 mit dem Ultraschallschwingungs-Generator 3, so dass das Werkzeug 2 mittels Ultraschall betreibbar ist.

Ein Versorgungsschlauch 24 dient dazu, das Handstück 20 mit einer Steuer- und/ oder Versorgungseinrichtung 25 zu verbinden. Während des Betriebs sind das Handstück 20 und das Werkzeug 2 über Leitungen und/ oder Drähte in dem Versorgungsschlauch 24 mit Arbeitsmedien, insbesondere mit elektrischer Energie sowie einem Fluid, zum Beispiel Spraywasser zur Kühlung des Werkzeugs, versorgbar. Des Weiteren dient der Versorgungsschlauch 24 insbesondere dazu, elektrische Signale und/ oder Daten zwischen der Steuer- und/ oder Versorgungseinrichtung 25 und dem Handstück 20 zu übertragen.

Die Steuer- und/ oder Versorgungseinrichtung 25 umfasst ein Gehäuse 29 und ist insbesondere als Tabletop-Einheit ausgebildet. Am Gehäuse 29 ist vorzugsweise eine Ablage 30 für das Handstück 20 vorgesehen. Zur Wiedergabe und Einstellung von Betriebsparametern für das Handstück 20 sowie für das Werkzeug 2 weist die Steuer- und/ oder Versorgungseinrichtung 25 zumindest eine Anzeige 26 sowie zumindest ein Betätigungselement 27 auf. Ein an die Steuer- und/ oder Versorgungseinrichtung 25 anschließbarer Behälter 28 dient als Fluidquelle für das Fluid, zum Beispiel für das Spraywasser. Im Inneren der Steuer- und/ oder Versorgungseinrichtung 25 ist des Weiteren eine elektrische Energiequelle zu Versorgung des Handstücks 20, insbesondere des Ultraschallschwingungs-Generator 3 und einer elektromagnetische Strahlung emittierenden Strahlungsquelle 19 vorgesehen.

Die elektromagnetische Strahlungsquelle 19 ist Teil einer Beleuchtungsvorrichtung 31, die am werkzeugseitigen Ende des Handstücks 20 zumindest eine Lichtabgabefläche zur Abgabe elektromagnetischer Strahlung auf die oder in Richtung der Behandlungsfläche aufweist.

Die Figur 4 zeigt ein in der Griffhülse 23 des Handstücks 20 angeordnete Ultraschallschwingungsbaugruppe. Die Ultraschallschwingungsbaugruppe umfasst einen Ultraschallschwingungs-Generator 3 mit mehreren, vorzugsweise drei bis zehn, piezoelektrischen Elementen 4, an die zur Erzeugung der Ultraschallschwingungen eine elektrische Spannung anlegbar ist, und eine Schwingachse 22 zur Übertragung der von dem Ultraschallschwingungs-Generator 3 erzeugten Schwingungen auf die Werkzeughaltevorrichtung 21. Die Schwingachse 22 ist insbesondere als längliche, sich entlang einer Längsachse 10 (siehe Figur 5) erstreckende Hohlachse ausgebildet, deren erstes Ende den Ultraschallschwingungs-Generator 3 kontaktiert und an deren dem ersten Ende gegenüberliegenden zweiten Ende zumindest ein Teil der Werkzeughaltevorrichtung 21 vorgesehen ist.

Zur Versorgung der mehreren piezoelektrischen Elemente 4 des Ultraschallschwingungs-Generators 3 mit elektrischer Spannung ist eine, insbesondere flexible, Leiterplatte 5 vorgesehen. Die Leiterplatte 5 erstreckt sich von einer Kupplungsvorrichtung oder einem Kupplungsende 32 zur Verbindung mit der Steuer- und/ oder Versorgungseinrichtung 25 in Richtung des Ultraschallschwingungs-Generator 3. Vorzugsweise ist zumindest ein Teil der Leiterplatte 5, insbesondere der Anschlussabschnitt 14, im Wesentlichen parallel zur Längsachse 10 oder zu einer Hülse 36 des Handstücks 20 angeordnet. Besonders bevorzugt ist zumindest ein Teil der Leiterplatte 5, insbesondere der Anschlussabschnitt 14, zwischen der Griffhülse 23 und einer weiteren Hülse 36 des Handstücks 20 angeordnet (siehe Figur 5).

Die Leiterplatte 5 umfasst mehrere Abschnitte, die insbesondere auch in der Figur 3 gut erkennbar sind, in der die als flexible Leiterplatte ausgebildete Leiterplatte 5 die Form eines flachen Streifens hat. Diese Form weist die flexible Leiterplatte 5 insbesondere auf, bevor sie in dem Ultraschall-Schwingungsgenerator 3 verbaut ist. Die Leiterplatte 5 umfasst einen Anschlussabschnitt 14, mehrere kreisförmige, Kontaktabschnitte 6 und mehrere Verbindungsabschnitte 8 zur Verbindung zweier benachbarter Kontaktabschnitte 6.

Die Kontaktabschnitte 6 sind räumlich seriell und/ oder elektrisch parallel angeordnet. Die Kontaktabschnitte 6 haben eine im Wesentlichen kreisförmige Form mit einem zentralen, kreisrunden Durchbruch 13. An jedem Kontaktabschnitt 6 ist zumindest ein Flächenkontakt 7 vorgesehen, an dem eine elektrisch leitende Leiterbahn oder Metallschicht, insbesondere eine Kupferschicht, der Leiterplatte 5 eines der mehreren piezoelektrischen Elemente 4 zum Anlegen der elektrischen Spannung kontaktiert. Die Flächenkontakte 7 bilden somit Elektroden, welche die piezoelektrischen Elemente 4 kontaktieren.

Jeder der mittig (d.h. zwischen zwei anderen Kontaktabschnitten 6) angeordneten Kontaktabschnitte 6 - gemäß der Figur 3 sind es drei - weist an zwei einander gegenüberliegenden Seiten jeweils einen Flächenkontakt 7 oder eine Elektrode auf, wobei bevorzugt jeweils ein Flächenkontakt 7 jedes mittig angeordneten Kontaktabschnitts 6 als positive Elektrode und als negative Elektrode ausgebildet ist. Die beiden äußeren oder endständigen Kontaktabschnitte 6 weisen jeweils nur an einer Seite einen Flächenkontakt 7 oder eine Elektrode auf, wobei gemäß der Figur 3 der linke Kontaktabschnitt 6 an seiner (mit "Top" bezeichneten) Oberseite einen Flächenkontakt 7 und der rechte Kontaktabschnitt 6 an seiner Unterseite einen (in der Figur 3 somit nicht erkennbaren) Flächenkontakt 7 aufweist.

Der die Kontaktabschnitte 6 umfassende Teilbereich der Leiterplatte 5 weist eine S-förmige Form auf, so wie dies zum Beispiel in der Figur 2 dargestellt ist, womit sich jeweils ein piezoelektrisches Element 4 zwischen zwei Kontaktabschnitten 6 und insbesondere zwischen zwei Flächenkontakten 7 unterschiedlicher Kontaktabschnitte 6 befindet, wobei jeweils einer dieser beiden Flächenkontakte 7 als positive Elektrode und der andere dieser beiden Flächenkontakte 7 als negative Elektrode ausgebildet ist. Dies ist auch aus der Figur 3 gut ersichtlich, in der die positiven und negativen Elektroden der Oberseite der Leiterplatte 5 bezeichnet sind. An der nicht erkennbaren Unterseite der Leiterplatte 5 der Figur 3 ist in entsprechender Weise jeweils die der Oberseite entgegengesetzte Elektrode angeordnet.

Die mehreren piezoelektrischen Elemente 4 und die mehreren Kontaktabschnitte 6 der Leiterplatte 5 bilden somit einen Stapel 9, in dem alternierend ein piezoelektrisches Element 4 und ein Kontaktabschnitt 6 angeordnet sind. Am Anfang und Ende des Stapels befindet sich jeweils einer der beiden endständigen Kontaktabschnitte 6, deren einziger Flächenkontakt 7 jeweils dem anschließenden piezoelektrischen Element 4 zugewandt ist, während die Seite ohne Flächenkontakt 7 oder Elektrode nach außen, d.h. von den piezoelektrischen Element 4 abgewandt angeordnet ist.

Aus den Figuren 2, 3 und 4 ist des Weiteren gut erkennbar, dass jeweils zwei der mehreren Kontaktabschnitte 6 durch einen schmalen und streifenförmigen, vorzugsweise flexiblen, Verbindungsabschnitt 8 der Leiterplatte 5 miteinander verbunden sind, wobei sich die Verbindungsabschnitte 8 außerhalb oder seitlich des Stapels 9 befinden. Aufgrund der S-förmigen Anordnung des die Kontaktabschnitte 6 umfassenden Teilbereichs der Leiterplatte 5 sind aufeinander folgende Verbindungsabschnitte 8 jeweils an einander (diametral) gegenüberliegenden Seiten des Stapels 9 angeordnet.

Wie aus der Figur 3 zu erkennen ist, sind an den Verbindungsabschnitten 8 Durchkontaktierungen 33 vorgesehen, an denen die Leiterbahnen die Leiterplatte 5 (deren Trägerschicht) durchsetzen, so dass sie abwechselnd an der Oberseite und Unterseite der Leiterplatte 5 verlaufen und an die jeweiligen positiven und negativen Elektroden der Ober- und Unterseite der Leiterplatte 5 anschließen.

Die piezoelektrischen Elemente 4 sind als runde, flachzylindrische, keramische Scheiben ausgebildet. In jedem piezoelektrischen Element 4 ist ein kreisrunder, zentral angeordneter Durchbruch 12 vorgesehen. Wenn die piezoelektrischen Elemente 4 und die Kontaktabschnitte 6 entlang einer gemeinsamen Längsachse 10, insbesondere in Form des Stapels 9, angeordnet sind, bilden die Durchbrüche 12 und die Durchbrüche 13 der Kontaktabschnitte 6 einen Durchgang 11 (siehe Figuren 2 und 5).

Der Durchgang 11 ist zum Durchleiten eines Behandlungsfluids, insbesondere einer Behandlungsflüssigkeit ausgebildet. Dazu ist vorzugsweise eine Fluidleitung 34 vorgesehen, die sich durch die Durchbrüche 12, 13 und somit den Durchgang 11 und/ oder den Stapel 9 erstreckt (siehe Figur 5). Der Stapel 9 ist um die Fluidleitung 34, insbesondere beabstandet davon, angeordnet.

Die Fluidleitung 34 erstreckt sich durch weitere Bauteile der Ultraschall-Behandlungsvorrichtung 1, insbesondere durch hülsenartige Bauteile, zum Beispiel durch eine Zylinderhülse 36, oder ist als integraler Leitungskanal eines hülsenartigen Bauteils, zum Beispiel der Zylinderhülse 36, ausgebildet. Zum Empfangen eines Fluids verläuft die Fluidleitung 34 bis zu der Kupplungsvorrichtung oder dem Kupplungsende 32, über welche(s) sie mit einer Fluidquelle verbindbar ist.

Aus der Figur 5 ist des Weiteren zu erkennen, dass die Fluidleitung 34 über ein Gewinde 35 oder ähnliche Verbindungsmittel mit der als Hohlachse ausgebildeten Schwingachse 22 verbunden ist. Eine Innenbohrung 38 der Schwingachse 22 ist flüssigkeitsleitend mit der Fluidleitung 34 verbunden oder die Fluidleitung 34 setzt sich in der Innenbohrung 38 fort, so dass ein Fluid durch die Schwingachse 22 bis zu der Werkzeughaltevorrichtung 21 und von dort, vorzugsweise durch das Werkzeug 2, in Richtung der Behandlungsstelle förderbar ist.

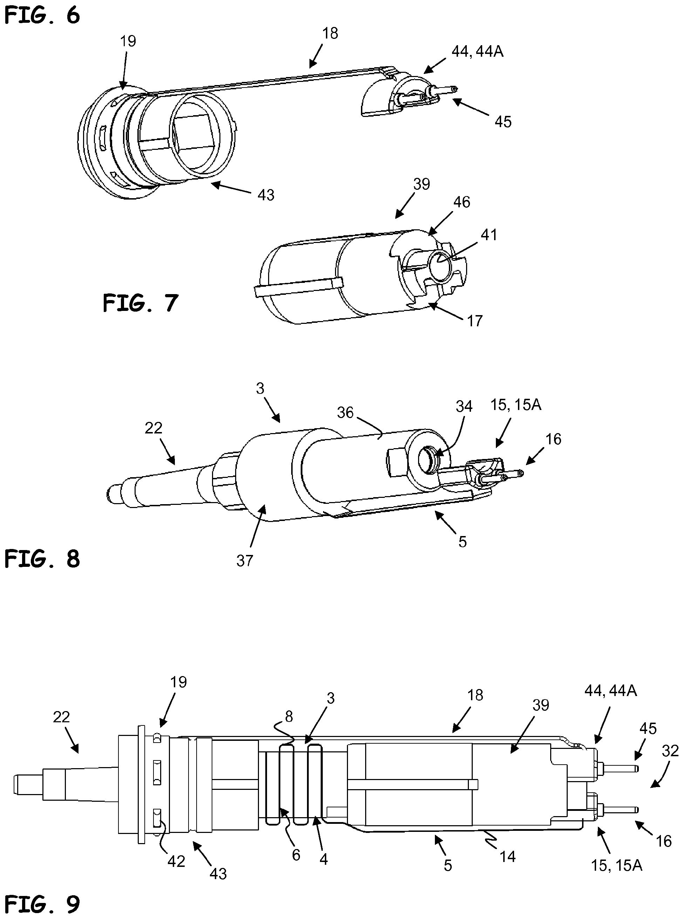

Der Stapel 9, insbesondere die piezoelektrischen Elemente 4 und zumindest der die Kontaktabschnitte 6 umfassende Teilbereich der Leiterplatte 5, ist von einer Umhüllung 37 umgeben, die insbesondere dazu vorgesehen ist, den Stapel 9 vor Verschmutzungen oder Beschädigungen zu schützen, elektrisch zu isolieren und/ oder innerhalb des Handstücks 20 zu fixieren (siehe auch Figur 8). Die Umhüllung 37 ist vorzugsweise aus einem Kunststoffmaterial hergestellt, insbesondere durch Vergießen. Die Umhüllung 37 weist insbesondere eine im Wesentlichen hohlzylindrische Form auf. Die Leiterplatte 5 erstreckt sich durch die Umhüllung 37 und/ oder verläuft entlang einer Außenfläche der Umhüllung 37, insbesondere zwischen der Umhüllung 37 und einer Befestigungshülse 39 des Handstücks 20.

Der streifenförmigen oder länglichen Anschlussabschnitt 14 der Leiterplatte 5 ist insbesondere zum Anschluss an eine elektrische Energiequelle und zum Übertragen der elektrischen Energie von der Energiequelle zu den Kontaktabschnitten 6 und zu den piezoelektrischen Elementen 4 vorgesehen. Dazu weist der Anschlussabschnitt 14 an seinem der elektrische Energiequelle zugewandten Ende einen Kunststoffkörper 15 auf, an dem zwei elektrische, mit der Leiterplatte 5 elektrisch verbundene Kontakte 16, insbesondere Stiftkontakte, zur Versorgung der Leiterplatte 5 mit elektrischer Energie vorgesehen sind. Die elektrischen Kontakte 16 sind mit der Leiterplatte 5, insbesondere deren Leiterbahnen, elektrisch leitend verbunden, zum Beispiel verlötet.

Der Kunststoffkörper 15 ist als Steckelement 15A geformt, das zur Befestigung und Positionierung der, insbesondere flexiblen, Leiterplatte 5 und der elektrischen Kontakte 16 in eine Steckaufnahme 17 (siehe Figur 7) der medizinischen Ultraschall-Behandlungsvorrichtung 1 oder des Handstücks 20 steckbar ist. Das Steckelement 15A ist gebogen, zum Beispiel sattelförmig, geformt und weist insbesondere an einer Seite eine konkave Biegung und an einer gegenüberliegenden Seite eine korrespondierende konvexe Biegung auf. Die Steckaufnahme 17 weist bevorzugt eine dem Steckelement 15A komplementäre Form auf.

Die Steckaufnahme 17 ist an einer Befestigungshülse 39 vorgesehen oder als integraler Teil der Befestigungshülse 39 geformt. Die Steckaufnahme 17 ist insbesondere an einem dem Kupplungsende 32 des Handstücks 20 zugewandten Ende der Befestigungshülse 39 angeordnet und von dem Kupplungsende 32 zum Einstecken des Steckelements 15A zugänglich.

Die Befestigungshülse 39 umfasst eine Aufnahme 40 zum zumindest teilweisen Aufnehmen der Zylinderhülse 36 und / oder der Fluidleitung 34. Die Befestigungshülse 39 umgibt somit die Zylinderhülse 36 und / oder der Fluidleitung 34, so wie dies in der Figur 5 dargestellt ist. Nach dem Aufschieben der Befestigungshülse 39 auf die Zylinderhülse 36 kann das Steckelement 15A in einfacher Weise in die Steckaufnahme 17 geschoben werden, wodurch die Leiterplatte 5 und die elektrischen Kontakte 16 zuverlässig fixiert und positioniert sind, so wie dies in der Figur 9 dargestellt ist.

Die Befestigungshülse 39 umfasst des Weiteren an einem dem Kupplungsende 32 des Handstücks 20 zugewandten Ende eine mit der Aufnahme 40 verbundene Öffnung 41 zur Aufnahme oder zum Durchführen der Fluidleitung 34.

Aus der Figur 9 ist auch zu erkennen, dass an dem Handstück 20 eine weitere oder zweite, insbesondere flexible, Leiterplatte 18 zur Versorgung einer an der Ultraschall-Behandlungsvorrichtung 1 oder an dem Handstück 20 angeordneten, elektromagnetische Strahlung emittierenden Strahlungsquelle 19 mit elektrischer Energie vorgesehen ist. Diese zweite Leiterplatte 18 ist von der (ersten) Leiterplatte 5 beabstandet angeordnet und/ oder als von der (ersten) Leiterplatte 5 separate Leiterplatte ausgebildet.

Die Strahlungsquelle 19 umfasst ein oder mehrere strahlungsemittierende Elemente, zum Beispiel LEDs 42. Die LEDs 42 sind auf einer und/ oder um eine Trägerhülse 43 angeordnet und dazu vorgesehen, elektromagnetische Strahlung in Richtung der Behandlungsstelle abzugeben. Die Trägerhülse 43 ist als hohlzylindrische Hülse ausgebildet, in der die Schwingachse 22 aufnehmbar ist (siehe Figuren 6 und 9).

Von der Strahlungsquelle 19 und/ oder der Trägerhülse 43 erstreckt sich die zweite Leiterplatte 18 in Richtung der Kupplungsvorrichtung oder des Kupplungsendes 32 des Handstücks 20. Die zweite Leiterplatte 18 passiert hierbei innerhalb der hohlen Griffhülse 23 insbesondere den Ultraschallschwingungs-Generator 3 und/ oder erstreckt sich parallel zu den Hülsen 36, 39. Die zweite Leiterplatte 18 ist zumindest in einem Abschnitt streifenförmigen und/ oder länglichen geformt.

Der streifenförmige oder längliche Abschnitt der zweiten Leiterplatte 18 ist insbesondere zum Anschluss an eine elektrische Energiequelle und zum Übertragen der elektrischen Energie von der Energiequelle zu der Strahlungsquelle 19 vorgesehen. Dazu weist die zweite Leiterplatte 18 an ihrem der elektrische Energiequelle zugewandten Ende einen Kunststoffkörper 44 auf, an dem zwei elektrische, mit der zweiten Leiterplatte 18 elektrisch verbundene Kontakte 45, insbesondere Stiftkontakte, zur Versorgung der Leiterplatte 18 und der Strahlungsquelle 19 mit elektrischer Energie vorgesehen sind. Die elektrischen Kontakte 44 sind mit der zweiten Leiterplatte 18, insbesondere deren Leiterbahnen, elektrisch verbunden, zum Beispiel verlötet.

Der Kunststoffkörper 44 ist als Steckelement 44A geformt, das zur Befestigung und Positionierung der zweiten, insbesondere flexiblen, Leiterplatte 18 und der elektrischen Kontakte 45 in eine Steckaufnahme 46 (siehe Figur 7) der medizinischen Ultraschall-Behandlungsvorrichtung 1 oder des Handstücks 20 steckbar ist. Der Kunststoffkörper 44 ist zum Beispiel aus Silikon oder Epoxidharz hergestellt und/ oder vorzugsweise elektrisch isolierend. Der Kunststoffkörper 44 ist vorzugsweise durch Vergießen oder Verspritzen hergestellt. Das Steckelement 44A ist gebogen, zum Beispiel sattelförmig, geformt und weist insbesondere an einer Seite eine konkave Biegung und an einer gegenüberliegenden Seite eine korrespondierende konvexe Biegung auf. Die Steckaufnahme 46 weist bevorzugt eine dem Steckelement 44A komplementäre Form auf.

Die Steckaufnahme 46 ist vorzugsweise so wie die Steckaufnahme 17 an der Befestigungshülse 39 vorgesehen oder als integraler Teil der Befestigungshülse 39 geformt. Die Steckaufnahme 46 ist insbesondere an einem dem Kupplungsende 32 des Handstücks 20 zugewandten Ende der Befestigungshülse 39 angeordnet und von dem Kupplungsende 32 zum Einstecken des Steckelements 44A zugänglich. Damit können bei der Montage des Handstücks 20 beide Steckelemente 15A, 44A nacheinander in einfacher Weise an der Befestigungshülse 39 angebracht werden, wodurch die, insbesondere flexiblen, Leiterplatten 5, 18 und die elektrischen Kontakte 16, 45 zuverlässig fixiert und positioniert sind, so wie dies in der Figur 9 dargestellt ist.

Die beschriebenen oder dargestellten Ausführungsbeispiele dienen insbesondere der Veranschaulichung der Erfindung. Die in einem Ausführungsbeispiel offenbarten Merkmale sind daher nicht auf dieses Ausführungsbeispiel beschränkt, sondern sind einzeln oder gemeinsam mit einem oder mehreren Merkmalen eines der anderen Ausführungsbeispiele kombinierbar.

## Patentansprüche

1. Medizinische Ultraschall-Behandlungsvorrichtung (1) zur Erzeugung von Ultraschallschwingungen und zur Übertragung der Ultraschallschwingungen auf ein mit der Ultraschall-Behandlungsvorrichtung (1) verbundenes oder verbindbares Werkzeug (2), umfassend: einen Ultraschallschwingungs-Generator (3) mit mehreren piezoelektrischen Elementen (4), die als flachzylindrische Plättchen mit jeweils einer Mantelfläche geformt sind und an die zur Erzeugung der Ultraschallschwingungen eine elektrische Spannung anlegbar ist, **dadurch gekennzeichnet, dass**
zur Versorgung der mehreren piezoelektrischen Elemente (4) mit der elektrischen Spannung an den piezoelektrischen Elementen (4) Kontaktabschnitte (6) vorgesehen sind, die durch eine streifenförmige und flexible Leiterplatte (5) gebildet sind, wobei die piezoelektrischen Elemente (4) und die Kontaktabschnitte (6) gemeinsam einen Stapel (9) bilden, in dem die streifenförmige und flexible Leiterplatte (5) gebogen verformt ist, wobei zwischen zwei benachbarten piezoelektrischen Elementen (4) des Stapels (9) jeweils einer der Kontaktabschnitte (6) angeordnet ist und/ oder zwischen zwei benachbarten Kontaktabschnitten (6) jeweils ein piezoelektrisches Element (4) des Stapels (9) angeordnet ist.

2. Medizinische Ultraschall-Behandlungsvorrichtung (1) nach Anspruch 1, **dadurch gekennzeichnet, dass**
an jedem der Kontaktabschnitte (6) zumindest ein Flächenkontakt (7) vorgesehen ist, an dem eine elektrisch leitende Metallschicht der Leiterplatte (5) eines der mehreren piezoelektrischen Elemente (4) kontaktiert.

3. Medizinische Ultraschall-Behandlungsvorrichtung (1) nach Anspruch 2, **dadurch gekennzeichnet, dass**
zumindest einer der Kontaktabschnitte (6) an zwei einander gegenüberliegenden Seiten jeweils einen Flächenkontakt (7) aufweist.

4. Medizinische Ultraschall-Behandlungsvorrichtung (1) nach einem der vorstehenden Ansprüche, **dadurch gekennzeichnet, dass**
die Kontaktabschnitte (6), insbesondere die Flächenkontakte (7) der Kontaktabschnitte (6), im Wesentlichen parallel zueinander angeordnet sind.

5. Medizinische Ultraschall-Behandlungsvorrichtung (1) nach einem der vorstehenden Ansprüche, **dadurch gekennzeichnet, dass**
jeweils zwei der Kontaktabschnitte (6) durch einen, vorzugsweise schmalen und/ oder streifenförmigen, Verbindungsabschnitt (8) der Leiterplatte (5) miteinander verbunden sind.

6. Medizinische Ultraschall-Behandlungsvorrichtung (1) nach einem der vorstehenden Ansprüche, **dadurch gekennzeichnet, dass**
die Kontaktabschnitte (6) der Leiterplatte (5) kreisförmig sind.

7. Medizinische Ultraschall-Behandlungsvorrichtung (1) nach Anspruch 5 oder 6, **dadurch gekennzeichnet, dass**
die, vorzugsweise schmalen und/ oder streifenförmigen, Verbindungsabschnitte (8) außerhalb des Stapels (9) angeordnet sind.

8. Medizinische Ultraschall-Behandlungsvorrichtung (1) nach Anspruch 5, 6 oder 7, **dadurch gekennzeichnet, dass**
in Bezug auf eine Längsachse (10) des Stapels (9) aufeinander folgende Verbindungsabschnitte (8) jeweils an entgegengesetzten Seiten des Stapels (9) angeordnet sind.

9. Medizinische Ultraschall-Behandlungsvorrichtung (1) nach einem der vorstehenden Ansprüche, **dadurch gekennzeichnet, dass**
der Stapel (9) einen Durchgang (11) aufweist, welcher aus Durchbrüchen (12) in den mehreren piezoelektrischen Elementen (4) und aus Durchbrüchen (13) in den Kontaktabschnitten (6) der Leiterplatte (5) gebildet ist.

10. Medizinische Ultraschall-Behandlungsvorrichtung (1) nach einem der vorstehenden Ansprüche, **dadurch gekennzeichnet, dass**
die Leiterplatte (5) einen, vorzugsweise streifenförmigen oder länglichen, Anschlussabschnitt (14) zum Anschluss an eine elektrische Energiequelle aufweist.

11. Medizinische Ultraschall-Behandlungsvorrichtung (1) nach Anspruch 10, **dadurch gekennzeichnet, dass**
der Anschlussabschnitt (14) an seinem der elektrische Energiequelle zugewandten Ende einen Kunststoffkörper (15) aufweist, an dem zwei elektrische, mit der Leiterplatte (5) elektrisch verbundene Kontakte (16) zur Versorgung der Leiterplatte (5) mit elektrischer Energie vorgesehen sind, wobei der Kunststoffkörper (15) als Steckelement (15A) geformt ist, das zur Befestigung der Leiterplatte (5) und der elektrischen Kontakte (16) in eine Steckaufnahme (17) der medizinischen Ultraschall-Behandlungsvorrichtung (1) steckbar ist.

12. Medizinische Ultraschall-Behandlungsvorrichtung (1) nach einem der vorstehenden Ansprüche 5 - 11, **dadurch gekennzeichnet, dass**
die Kontaktabschnitte (6) relativ zu dem Anschlussabschnitt (14) und/ oder relativ zu den Verbindungsabschnitten (8) gewinkelt angeordnet sind.

13. Medizinische Ultraschall-Behandlungsvorrichtung (1) nach einem der vorstehenden Ansprüche, **gekennzeichnet durch**
eine elektromagnetische Strahlung emittierenden Strahlungsquelle (19), zu deren Versorgung mit elektrischer Energie die Leiterplatte (5) zur Versorgung der mehreren piezoelektrischen Elemente (4) mit elektrischer Spannung oder eine separate, insbesondere flexible, Leiterplatte (18) vorgesehen ist.

14. Verfahren zur Herstellung einer medizinischen Ultraschall-Behandlungsvorrichtung (1) zur Erzeugung von Ultraschallschwingungen und zur Übertragung der Ultraschallschwingungen auf ein mit der Ultraschall-Behandlungsvorrichtung (1) verbundenes oder verbindbares Werkzeug (2), umfassend: zur Verfügung stellen eines Ultraschallschwingungs-Generator (3) mit mehreren piezoelektrischen Elementen (4), die als flachzylindrische Plättchen mit jeweils einer Mantelfläche geformt sind und an die zur Erzeugung der Ultraschallschwingungen eine elektrische Spannung anlegbar ist, **dadurch gekennzeichnet, dass**
die mehreren piezoelektrischen Elemente (4) mit Kontaktabschnitten (6) verbunden werden, die durch eine streifenförmige und flexible Leiterplatte (5) gebildet sind, über welche die piezoelektrischen Elemente (4) mit der elektrischen Spannung versorgbar sind, wobei mit den piezoelektrischen Elementen (4) und den Kontaktabschnitten (6) ein Stapel (9) gebildet wird, nach dessen Herstellung die streifenförmige und flexible Leiterplatte (5) gebogen ist, wobei zwischen zwei benachbarten piezoelektrischen Elementen (4) des Stapels (9) jeweils einer der Kontaktabschnitte (6) angeordnet ist und/ oder zwischen zwei benachbarten Kontaktabschnitten (6) jeweils ein piezoelektrisches Element (4) des Stapels (9) angeordnet ist.

15. Verfahren nach Anspruch 14, **dadurch gekennzeichnet, dass**
an jedem Kontaktabschnitt (6) zumindest ein Flächenkontakt (7) mit einer elektrisch leitenden Metallschicht vorgesehen ist, wobei die Kontaktabschnitte (6) im Wesentlichen parallel zueinander angeordnet werden und zwischen zwei benachbarten Kontaktabschnitten (6) eines der mehreren piezoelektrischen Elemente (4) kontaktierend eingefügt wird, so dass das zwischen den zwei benachbarten Kontaktabschnitten (6) eingefügte piezoelektrische Element (4) jeweils einen Flächenkontakt (7) der beiden benachbarten Kontaktabschnitte (6) kontaktiert.

## Claims

1. A medical ultrasonic treatment device (1) for generating ultrasonic vibrations and for transmitting the ultrasonic vibrations to a tool (2) which is or can be connected to the ultrasonic treatment device (1), comprising: an ultrasonic vibration generator (3) with a plurality of piezoelectric elements (4) which are formed as flat cylindrical plates, each having a lateral surface and to which an electric voltage can be applied in order to generate the ultrasonic vibrations, **characterized in that**
contact sections (6) are provided on the piezoelectric elements (4) to supply the plurality of piezoelectric elements (4) with electric voltage, the contact sections (6) being formed by a strip-shaped and flexible circuit board (5), wherein the piezoelectric elements (4) and the contact sections (6) commonly form a stack (9) in which the strip-shaped and flexible circuit board (5) is deformed by bending, wherein one of the contact sections (6) is arranged between two neighboring piezoelectric elements (4) of the stack (9) and/ or a piezoelectric element (4) of the stack (9) is arranged between two neighboring contact sections (6).

2. The medical ultrasonic treatment device (1) according to claim 1, **characterized in that** on each contact section (6) at least one surface contact (7) is provided, at which an electrically conducting metal layer of the circuit board (5) contacts one of the plurality of piezoelectric elements (4).

3. The medical ultrasonic treatment device (1) according to claim 2, **characterized in that** at least one of the contact sections (6) comprises a surface contact (7) on each of two opposite sides.

4. The medical ultrasonic treatment device (1) according to any one of the preceding claims, **characterized in that**
the contact sections (6), in particular, the surface contacts (7) of the contact sections (6) are substantially arranged parallel to one another.

5. The medical ultrasonic treatment device (1) according to any one of the preceding claims, **characterized in that**
two respective contact sections (6) are connected to one another by an, in particular, narrow and/ or strip-shaped connecting section (8) of the circuit board (5).

6. The medical treatment device (1) according to any one of the preceding claims, **characterized in that**
the contact sections (6) of the circuit board (5) are circular in shape.

7. The medical ultrasonic treatment device (1) according to claim 5 or 6, **characterized in that**
the preferably narrow and/or strip-shaped connecting sections (8) are arranged outside the stack (9).

8. The medical ultrasonic treatment device (1) according to claims 5, 6 or 7, **characterized in that**
the connecting sections (8) following one another relative to a longitudinal axis (10) of the stack (9), are each arranged on opposite sides of the stack (9).

9. The medical ultrasonic treatment device (1) according to any one of the preceding claims, **characterized in that**
the stack (9) comprises a passage (11) which is formed of openings (12) in the plurality of piezoelectric elements (4) and of openings (13) in the contact sections (6) of the circuit board (5).

10. The medical ultrasonic treatment device (1) according to any one of the preceding claims, **characterized in that**
the circuit board (5) comprises an linking section (14), particularly in strip or elongated form, for connection to an electrical power source.

11. The medical ultrasonic treatment device (1) according to claim 10, **characterized in that**
the linking section (14) comprises, on its end facing the electrical power source, a plastic body (15), on which two electrical contacts (16) electrically connected to the circuit board (5) for supplying the circuit board (5) with electric energy are provided, wherein the plastic body (15) is formed as a plug element (15A) which can be inserted into a plug connector (17) of the medical ultrasonic treatment device (1) to fasten the circuit board (5) and the electrical contacts (16).

12. The medical treatment device (1) according to any one of the preceding claims 5 - 11, **characterized in that**
the contact sections (6) are arranged at an angle relative to the linking section (14) and/or relative to the connecting sections (8).

13. The medical ultrasonic treatment device (1) according to any one of the preceding claims, **characterized by**
a radiation source (19) for emitting electromagnetic radiation, wherein the circuit board (5) for supplying the plurality of piezoelectric elements (4) with electric voltage or a separate, particularly flexible circuit board (18) is provided for supply of the radiation source (19) with electric energy.

14. A method for manufacturing a medical ultrasonic treatment device (1) for generating ultrasonic vibrations and for transmitting the ultrasonic vibrations to a tool (2) which is or can be connected to the ultrasonic treatment device (1), comprising: providing an ultrasonic vibration generator (3) with a plurality of piezoelectric elements (4) which are formed as flat cylindrical plates, each having a lateral surface and to which an electrical voltage can be applied in order to generate the ultrasonic vibrations, **characterized in that**
the plurality of piezoelectric elements (4) get connected to contact sections (6) which are formed by a strip-shaped and flexible circuit board (5) and through which the piezoelectric elements (4) are supplied with electric voltage, wherein a stack (9) is formed by the piezoelectric elements (4) and the contact sections (6), wherein after forming the stack (9) the strip-shaped and flexible circuit board (5) is bent, wherein one of the contact sections (6) is arranged between two neighboring piezoelectric elements (4) of the stack (9) and/ or a piezoelectric element (4) of the stack (9) is arranged between two neighboring contact sections (6).

15. The method according to claim 14, **characterized in that**
wherein on each contact section (6) at least one surface contact (7) with an electrically conducting metallic layer is provided, wherein the contact sections (6) are arranged substantially parallel to one another and wherein between two neighboring contact sections (6) one of the plurality of piezoelectric elements (4) is contactingly inserted, so that the piezoelectric element (4) inserted between the two neighboring contact sections (6) makes contact with one surface contact (7) of each of the two neighboring contact sections (6).

## Revendications

1. Dispositif de traitement médical par ultrasons (1), destiné à générer des vibrations ultrasonores et à transmettre les vibrations ultrasonores sur un outil (2) relié ou susceptible d'être relié avec le dispositif de traitement par ultrasons (1), comprenant: un générateur de vibrations ultrasonores (3), pourvu de plusieurs éléments piézoélectriques (4), qui sont façonnés sous la forme de plaquettes cylindriques plates, dotées chacune d'une surface d'enveloppe et sur lesquelles, pour générer les vibrations ultrasonores est applicable une tension électrique, **caractérisé en ce que**
pour l'alimentation en tension électrique des plusieurs éléments piézoélectriques (4), des sections de contact (6) qui sont formées par une carte de circuit imprimé (5) souple et en forme de bande sont prévues sur les éléments piézoélectriques (4), les éléments piézoélectriques (4) et les sections de contact (6) formant ensemble une pile (9) dans laquelle la carte de circuit imprimé (5) souple et en forme de bande se déforme sous forme incurvée, entre deux éléments piézoélectriques (4) voisins de la pile (9) étant placée chaque fois l'une des sections de contact (6) et/ ou entre deux sections de contact (6) voisines étant placé chaque fois un élément piézoélectrique (4) de la pile (9).

2. Dispositif de traitement médical par ultrasons (1) selon la revendication 1, **caractérisé en ce que**
sur chacune des sections de contact (6) est prévu au moins un contact superficiel (7) avec lequel entre en contact une couche métallique conductrice d'électricité de la carte de circuit imprimé (5) de l'un des plusieurs éléments piézoélectriques (4).

3. Dispositif de traitement médical par ultrasons (1) selon la revendication 2, **caractérisé en ce qu'**au moins l'une des sections de contact (6) comporte chaque fois un contact superficiel (7) sur deux faces mutuellement opposées.

4. Dispositif de traitement médical par ultrasons (1) selon l'une quelconque des revendications précédentes, **caractérisé en ce que**
les sections de contact (6), notamment les contacts superficiels (7) des sections de contact (6), sont placé(e)s sensiblement à la parallèle les un(e)s des autres.

5. Dispositif de traitement médical par ultrasons (1) selon l'une quelconque des revendications précédentes, **caractérisé en ce que**
chaque fois deux des sections de contact (6) sont connectées l'une à l'autre par un segment de connexion (8), de préférence étroit et/ ou en forme de bande de la carte de circuit imprimé (5).

6. Dispositif de traitement médical par ultrasons (1) selon l'une quelconque des revendications précédentes, **caractérisé en ce que**
les sections de contact (6) de la carte de circuit imprimé (5) sont de forme circulaire.

7. Dispositif de traitement médical par ultrasons (1) selon la revendication 5 ou 6, **caractérisé en ce que**
les segments de connexion (8) de préférence étroits et/ ou en forme de bandes sont placés à l'extérieur de la pile (9).

8. Dispositif de traitement médical par ultrasons (1) selon la revendication 5, 6 ou 7, **caractérisé en ce**
**qu'**en rapport à un axe longitudinal (10) de la pile (9), des segments de connexion (8) successifs sont placés respectivement sur des faces opposées de la pile (9).

9. Dispositif de traitement médical par ultrasons (1) selon l'une quelconque des revendications précédentes, **caractérisé en ce que**
la pile (9) comporte un passage (11) qui est formé d'ajours (12) dans les plusieurs éléments piézoélectriques (4) et d'ajours (13) dans les sections de contact (6) de la carte de circuit imprimé (5).

10. Dispositif de traitement médical par ultrasons (1) selon l'une quelconque des revendications précédentes, **caractérisé en ce que**
la carte de circuit imprimé (5) comporte un segment de raccordement (14), de préférence en forme bande ou allongé, destiné à être raccordé sur une source d'énergie électrique.

11. Dispositif de traitement médical par ultrasons (1) selon la revendication 10, **caractérisé en ce que**
sur son extrémité dirigée vers la source d'énergie électrique, le segment de raccordement (14) comporte un corps en matière plastique (15) sur lequel sont prévus deux contacts électriques (16), électriquement reliés avec la carte de circuit imprimé (5) pour l'alimentation en énergie électrique de la carte de circuit imprimé (5), le corps en matière plastique (15) étant façonné sous la forme d'un élément enfichable (15A), qui pour la fixation de la carte de circuit imprimé (5) et des contacts électriques (16) est enfichable dans une prise d'enfichage (17) du dispositif de traitement médical par ultrasons (1).

12. Dispositif de traitement médical par ultrasons (1) selon l'une quelconque des revendications précédentes 5 - 11, **caractérisé en ce que**
les sections de contact (6) sont placées de manière coudée par rapport au segment de raccordement (14) et/ ou par rapport aux segments de connexion (8).

13. Dispositif de traitement médical par ultrasons (1) selon l'une quelconque des revendications précédentes, **caractérisé par**
une source de rayonnement (19) émettant un rayonnement électromagnétique, pour l'alimentation en énergie électrique de laquelle est prévue la carte de circuit imprimé (5) destinée à alimenter en tension électrique les plusieurs éléments piézoélectriques (4) ou une carte de circuit imprimé (18) séparée, notamment souple.

14. Procédé, de fabrication d'un dispositif médical de traitement par ultrasons (1), destiné à générer des vibrations ultrasonores et à transmettre les vibrations ultrasonores sur un outil (2) relié ou susceptible d'être relié avec le dispositif de traitement par ultrasons (1), comprenant: la mise à disposition d'un générateur de vibrations ultrasonores (3) pourvu de plusieurs éléments piézoélectriques (4), qui sont façonnés sous la forme de plaquettes cylindriques plates, dotées chacune d'une surface d'enveloppe et sur lesquelles, pour générer les vibrations ultrasonores est applicable une tension électrique, **caractérisé en ce qu'**on connecte les plusieurs éléments piézoélectriques (4) sur des sections de contact (6) qui sont formées par une carte de circuit imprimé (5) souple et en forme de bande, par l'intermédiaire de laquelle les éléments piézoélectriques (4) sont susceptibles d'être alimentés avec la tension électrique, avec les éléments piézoélectriques (4) et les sections de contact (6) étant créée une pile (9), après la création de laquelle la carte de circuit imprimé (5) souple et en forme de bande est cintrée, entre deux éléments piézoélectriques (4) voisins de la pile (9) étant placée chaque fois l'une des sections de contact (6) et/ ou entre deux sections de contact (6) voisines étant placé chaque fois un élément piézoélectrique (4) de la pile (9).

15. Procédé selon la revendication 14, **caractérisé en ce que**
sur chaque section de contact (6) est prévu au moins un contact superficiel (7) pourvu d'une couche métallique conductrice d'électricité, les sections de contact (6) étant placées sensiblement à la parallèle les unes des autres et on insère entre deux sections de contact (6) voisines, étant inséré, de manière à le faire entrer en contact l'un des plusieurs éléments piézoélectriques (4), de sorte que l'élément piézoélectrique (4) inséré entre les deux sections de contact (6) voisines entre en contact avec chaque fois un contact superficiel (7) des deux sections de contact (6) voisines.
